# DEMANDE DE BREVET EUROPEEN

(11) **EP 4 756 202 A1**
(43) Date de publication de la demande: **10.06.2026**
(21) Numéro de dépôt: 25202670.3
(22) Date de dépôt: 17.09.2025
(51) Int. Cl.: F02C 7/04, F02C 7/042, F02C 7/057

(54) **AÉRONEF MULTIMOTEUR MUNI D'AU MOINS UNE CONDUITE D'ALIMENTATION AIR ÉQUIPÉE D'UN DÉFLECTEUR D'AIR**

(30) Priorité: 09.12.2024 FR 2413696
(71) Demandeur: Airbus Helicopters, 13725 Marignane Cedex (FR)
(72) Inventeur: MAUGER, Fabien, 13310 SAINT MARTIN DE CRAU (FR); FINCK, Sébastien, 13170 LES PENNES MIRABEAU (FR); LEYDER, Sylvie, 13880 VELAUX (FR)
(74) Mandataire: GPI Brevets

(57) **Abrégé**

La présente invention concerne un aéronef (1) comprenant un premier turbomoteur (21) et un deuxième turbomoteur (31) alimentés en air respectivement par un premier système d'acheminement d'air (401) et un deuxième système d'acheminement d'air (402) ayant respectivement une première conduite d'admission (45) d'air et une deuxième conduite d'admission d'air (48). Pour une seule conduite d'admission d'air équipée (400) parmi la première conduite d'admission d'air et la deuxième conduite d'admission d'air, ledit aéronef comporte un séparateur d'air (50) apte à être agencé en utilisation dans la conduite d'admission d'air en amont de l'entrée d'air et en aval de la section d'entrée correspondante.

## Description

La présente invention concerne un aéronef multimoteur muni d'au moins une conduite d'alimentation d'air équipée d'un déflecteur d'air.

Un aéronef est usuellement muni d'une installation motrice comprenant au moins un moteur, voire au moins une boîte de transmission de puissance. Par exemple, un giravion multimoteur est muni de plusieurs moteurs pour entraîner en rotation au moins un rotor principal via une boîte de transmission de puissance. Ce rotor principal participe au moins partiellement à la sustentation voire à la propulsion du giravion.

En particulier, un moteur peut être un turbomoteur comprenant un générateur de gaz et au moins une turbine de puissance. Le générateur de gaz est muni d'un compresseur alimentant en air comprimé une chambre de combustion. De plus, le générateur de gaz est muni d'un ensemble de détente comprenant au moins une turbine haute pression mise en mouvement par les gaz chauds sortant de la chambre de combustion, et solidaire en rotation du compresseur.

Pour alimenter en comburant un turbomoteur avec de l'air provenant de l'extérieur, l'aéronef comporte un système d'alimentation en air. Le système d'alimentation en air peut comprendre au moins une section d'entrée radiale ou axiale reliée par au moins une conduite d'admission d'air à une entrée d'air du turbomoteur. La section d'entrée peut être équipée d'un filtre par exemple, qu'il soit installé dans l'entrée d'air du turbomoteur et/ou dans le conduit d'entrée d'air de l'aéronef.

Les performances d'un turbomoteur dépendent notamment du flux d'air qui alimente le compresseur. Le système d'alimentation en air d'un aéronef peut perturber ce flux d'air, et peut dans des cas particuliers conduire à un phénomène de pompage du turbomoteur. Le pompage d'un turbomoteur intervient quand le flux d'air présente un angle d'incidence par rapport aux aubes du compresseur supérieur à un angle limite. Cet angle d'incidence élevé peut notamment être atteint en présence de perturbation de flux d'air comme une giration d'air, un champ de pression d'air non uniforme, et/ou un champ de température d'air non uniforme. Le décrochage aérodynamique en résultant ne permet plus d'alimenter en air la chambre de combustion.

Sur un aéronef bimoteur, deux turbomoteurs sont classiquement agencés l'un à côté de l'autre, et sont alimentés par deux systèmes d'alimentation en air indépendants. Les turbomoteurs sont identiques. Par contre, les deux systèmes d'entrée d'air sont symétriques, au regard d'un plan vertical de symétrie dans le référentiel de l'aéronef. Les effets générés par les deux systèmes d'alimentation en air de l'aéronef sur les flux d'air transmis aux deux turbomoteurs sont alors dissymétriques. De tels effets sont dénommés « effets d'installation » par la suite. Le flux d'air alimentant un premier turbomoteur présente un angle d'incidence par rapport à des aubes du compresseur de ce premier turbomoteur qui diminue par rapport à une valeur moyenne, alors qu'à l'inverse cet angle d'incidence augmente pour l'autre moteur et se rapproche de fait de la limite de pompage.

Pour éviter le pompage, un turbomoteur peut être adapté afin de comprendre des aubes de compresseur directrices, dénommées « Variable Inlet Guide Vane » en langue anglaise, et/ou une vanne de décharge afin de diminuer cet angle d'incidence par effets de pressions d'air dans le compresseur.

Le document CN 114033542 A décrit un système d'alimentation en air d'un moteur d'hélicoptère. Ce système comprend une entrée d'air. Un volet est monté sur le bord inférieur de l'entrée d'air.

Les documents US 3 616 616 A, US 2021/047964 A1, US 2008/317587 A1, US 2017/241342 A1 , US 2018/371996 A1, et US 2022/170430 A1 sont aussi connus.

La présente invention a alors pour objet de proposer un aéronef innovant pour limiter les risques de pompage.

L'invention vise ainsi un aéronef comprenant un premier turbomoteur et un deuxième turbomoteur alimentés en air respectivement par un premier système d'acheminement d'air et un deuxième système d'acheminement d'air, le premier système d'acheminement d'air comprenant une première section d'entrée reliée par au moins une première conduite d'admission d'air à une première entrée d'air du premier turbomoteur, le deuxième système d'acheminement d'air comprenant une deuxième section d'entrée reliée par au moins une deuxième conduite d'admission d'air à une deuxième entrée d'air du deuxième turbomoteur.

Pour au moins une conduite d'admission d'air équipée parmi la première conduite d'admission d'air et la deuxième conduite d'admission d'air, l'aéronef comporte un séparateur d'air apte à être agencé, à demeure ou dans une position d'utilisation, dans la conduite d'admission d'air équipée en amont de l'entrée d'air du turbomoteur correspondant et en aval de la section d'entrée correspondante de l'aéronef.

Le séparateur d'air d'une conduite d'admission d'air équipée permet ainsi de redresser l'écoulement d'air en amont du turbomoteur concerné afin de compenser les effets d'installation générés par le système d'acheminement d'air sur le flux d'air à ingérer. Dès lors, le séparateur d'air peut éviter d'agencer des dispositifs spécifiques dans les turbomoteurs à cet effet.

Ainsi, l'invention permet de limiter simplement les risques de pompage liés aux effets d'installation, et peut éviter de modifier un turbomoteur contrairement à un état de l'art classique. En outre, l'invention offre la possibilité de faire varier la configuration de l'aéronef selon le turbomoteur utilisé et/ou les performances souhaitées, en adaptant ou en retirant un séparateur d'air avant vol.

Eventuellement, une seule conduite d'admission d'air est équipée d'un séparateur d'air, en particulier si un seul turbomoteur est susceptible d'être sujet au phénomène de pompage en raison d'effets d'installation dissymétriques. Alternativement, les deux conduites d'admission d'air sont chacune équipées d'un séparateur d'air.

L'aéronef peut de plus comporter une ou plusieurs des caractéristiques qui suivent.

Selon une possibilité, le premier système d'acheminement d'air et le deuxième système d'acheminement d'air peuvent être symétriques par rapport à un plan de symétrie de l'aéronef.

Eventuellement, la première section d'entrée d'air peut comporter un premier filtre et la deuxième section d'entrée d'air peut comporter un deuxième filtre.

Ces diverses caractéristiques sont susceptibles d'engendrer des effets d'installation dissymétriques sur les écoulements d'air pouvant être traités avec au moins un séparateur d'air selon l'invention.

Quel que soit le nombre de turbomoteurs, un séparateur d'air peut partager localement en deux un volume interne délimité par la conduite d'admission d'air équipée, l'air passant de la section d'entrée à l'entrée d'air correspondante de part et d'autre du séparateur d'air.

Selon une possibilité compatible avec les précédentes, ledit séparateur d'air peut comporter une lame.

Une lame peut permettre de redresser de manière adéquate l'écoulement d'air en amont d'un turbomoteur.

Eventuellement, ladite lame peut être vrillée.

La lame peut avoir une géométrie adaptée pour redresser de manière adéquate l'écoulement d'air en amont d'un turbomoteur.

Selon une possibilité compatible avec les précédentes, ledit séparateur d'air est immobile en fonctionnement dans la conduite d'admission d'air équipée.

L'expression « en fonctionnement » signifie que le séparateur d'air est immobile pendant un vol de l'aéronef. Ce séparateur d'air peut néanmoins être démontable. La forme du séparateur d'air peut notamment être définie pour compenser les effets d'installation générés par le système d'entrée d'air. Ce séparateur d'air peut être installé dans le conduit d'acheminement d'air via des fixations afin de pouvoir être démonté si nécessaire, ou intégré, moulé voire collé sans dépose possible.

Alternativement, ledit séparateur d'air peut comporter une partie mobile qui est mobile par rapport à la conduite d'admission d'air équipée, ledit aéronef comprenant un actionneur connecté mécaniquement à la partie mobile pour mettre en mouvement la partie mobile sur commande.

**L'expression** « mobile par rapport à la conduite d'admission d'air équipée » signifie que la partie mobile peut être déplacée selon au moins un degré de liberté et/ou déformée. Ainsi, le mouvement de la partie mobile peut être obtenu par une déformation d'au moins une section du séparateur et/ou par un mécanisme qui laisse au moins un degré de liberté en translation ou en rotation à la partie mobile pour permettre son déplacement. Le mouvement de la partie mobile engendré par l'actionneur peut donc comprendre une translation, une rotation, et/ou une déformation en torsion par exemple.

Cette variante offre la possibilité de modifier les effets d'installation de l'aéronef, et donc la performance du turbomoteur sur une partie étendue de sa plage de fonctionnement.

Par exemple, l'aéronef peut comporter un contrôleur communiquant avec au moins un senseur et ledit actionneur pour asservir ledit actionneur.

Le contrôleur est configuré pour asservir l'actionneur, et donc la position de la partie mobile en fonction de la situation courante évaluée avec le ou les senseurs.

Ainsi, ledit au moins un senseur comporte au moins un des senseurs suivants : un senseur de vitesse de rotation d'un compresseur du turbomoteur alimenté en air par la conduite d'admission d'air équipée, un senseur de pression mesurant une pression de l'air alimentant le turbomoteur alimenté en air par la conduite d'admission d'air équipée, un senseur de température mesurant une température de l'air alimentant le turbomoteur alimenté en air par la conduite d'admission d'air équipée.

Chacun des paramètres précités peut en effet avoir une influence sur la performance du turbomoteur et sur les risques de pompage.

Selon une possibilité, ladite partie mobile est déformable en torsion.

Par exemple, l'actionneur peut tordre la partie mobile, éventuellement dans une limite de 60 degrés entre ses arêtes extrêmes.

Alternativement, ledit séparateur d'air peut comporter une partie fixe agencée dans la conduite d'admission d'air équipée, la partie mobile étant agencée dans la conduite d'admission d'air équipée et connectée à la partie fixe par une liaison élastiquement déformable en torsion, ledit actionneur étant configuré pour engendrer une rotation de la partie mobile par rapport à la partie fixe.

Le séparateur d'air peut comporter trois parties pour pouvoir être déformable en torsion.

Au repos, la partie mobile, la partie fixe et la liaison élastiquement déformable en torsion peuvent être coplanaires. En revanche, l'actionneur peut être sollicité pour déformer le séparateur d'air en engendrant une rotation de la partie mobile.

Alternativement, ledit séparateur d'air peut comporter une partie fixe agencée dans la conduite d'admission d'air équipée, la partie mobile étant mobile en translation par rapport à la partie fixe selon un axe d'extension de la conduite d'admission d'air équipée, ledit actionneur étant configuré pour engendrer une translation de la partie mobile par rapport à la partie fixe.

La longueur du séparateur d'air peut alors pilotée par l'actionneur.

Alternativement, ladite partie mobile peut être mobile entre une première position et une deuxième position, la partie mobile étant au moins partiellement en dehors de la conduite d'admission d'air équipée dans la première position et partageant un volume interne de la conduite d'admission d'air équipée en deux dans la deuxième position.

Le séparateur d'air peut être agencé dans la conduite d'acheminement d'air concerné seulement si nécessaire.

L'invention et ses avantages apparaîtront avec plus de détails dans le cadre de la description qui suit avec des exemples donnés à titre illustratif en référence aux figures annexées qui représentent :
la figure 1, une vue schématique d'un exemple d'aéronef selon l'invention,
la figure 2, une vue tronquée en perspective d'un système d'acheminement d'air muni d'un séparateur d'air,
la figure 3, une vue partielle en perspective d'un système d'acheminement d'air muni d'un séparateur d'air,
la figure 4, une vue de côté schématique d'un système d'acheminement d'air muni d'un séparateur d'air,
la figure 5, une vue de face du système d'acheminement d'air de la figure 4,
la figure 6, une vue de côté schématique d'un système d'acheminement d'air muni d'un séparateur d'air,
la figure 7, une vue de face du système d'acheminement d'air de la figure 6 avec un séparateur d'air ayant une partie mobile dans une première position,
la figure 8, une vue de face d'un système d'acheminement d'air muni d'un séparateur d'air ayant une partie mobile déformable,
la figure 9, une vue de côté d'un système d'acheminement d'air avec un séparateur d'air ayant une partie mobile dans une position rétractée,
la figure 10, une vue de côté du système d'acheminement d'air de la figure 9 avec un séparateur d'air ayant une partie mobile dans une position étendue,
la figure 11, une vue de face du système d'acheminement d'air des figures 9 et 10,
la figure 12, une vue de face d'un système d'acheminement d'air avec un séparateur d'air en dehors de la conduite d'acheminement d'air,
la figure 13, une vue de face du système d'acheminement d'air de la figure 12 avec le séparateur d'air dans la conduite d'acheminement d'air.

Les éléments présents dans plusieurs figures distinctes sont affectés d'une seule et même référence.

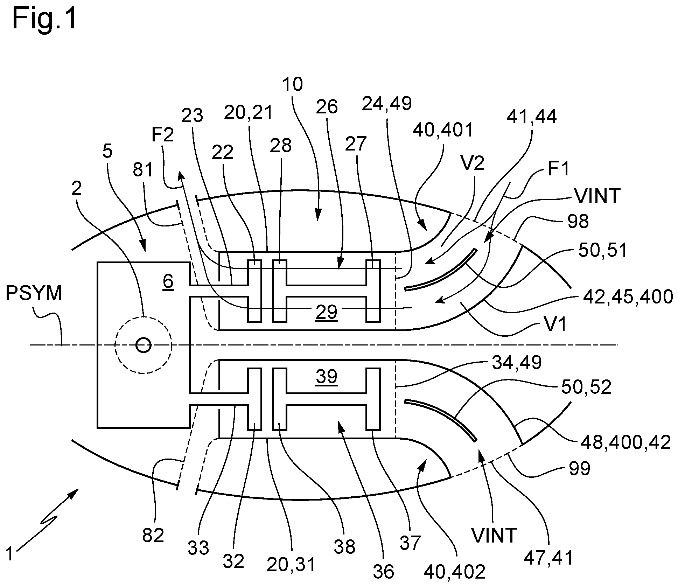

La figure 1 présente un aéronef 1 selon l'invention muni d'une installation motrice 10. Par exemple, l'installation motrice 10 met en mouvement au moins un rotor 2 ou une hélice, via une chaine mécanique 5. Selon l'exemple illustré, l'installation motrice 10 est mécaniquement reliée à une boîte de transmission de puissance 6 mettant en rotation au moins un rotor 2.

Cette installation motrice 10 comporte au moins un premier turbomoteur 21 et un deuxième turbomoteur 31. La référence 20 désigne n'importe quel turbomoteur, les références 21, 31 désignant des turbomoteurs particuliers si besoin.

Les turbomoteurs 21, 31 sont munis d'un générateur de gaz 26, 36 et d'une turbine basse pression 22, 32 reliée par un arbre de puissance 23, 33 à la chaîne mécanique 5. Plus précisément, le générateur de gaz 26,36 comporte un compresseur 27, 37 à au moins un étage de compression, une chambre de combustion 29, 39 alimentée en carburant par un doseur de carburant et en air par le compresseur 27, 37, et au moins un étage de turbine haute pression 28,38 solidaire en rotation du compresseur 27, 37. Conformément à la flèche F2, les gaz sortant de la chambre de combustion 29, 39 mettent alors en mouvement la ou les turbines haute pression 28, 38 et la ou les turbines basse pression 22, 32, puis sont dirigés vers l'extérieur par une ou des tuyères 81, 82 représentées schématiquement.

Le ou les turbomoteurs 20 sont alors alimentés en air par un des systèmes d'acheminement d'air 40 respectifs. Un tel système d'acheminement d'air 40 comprend une section d'entrée 41, éventuellement pourvue d'un filtre, reliée par au moins une conduite d'admission d'air 42 à une entrée d'air 49 du turbomoteur 20 correspondant. Les références 40, 41, 42 désignent des organes de n'importe quel système d'acheminement d'air, les références 401, 44, 45, 402, 47, 48 désignant des organes de système d'acheminement d'air particuliers si besoin.

Ainsi, l'aéronef 1 illustré comporte un premier turbomoteur 21 et un deuxième turbomoteur 31 alimentés en air respectivement par un premier système d'acheminement d'air 401 et un deuxième système d'acheminement d'air 402, le premier système d'acheminement d'air 401 comprenant une première section d'entrée 44 reliée par au moins une première conduite d'admission 45 d'air à une première entrée d'air 24 du premier turbomoteur 21, le deuxième système d'acheminement d'air 402 comprenant une deuxième section d'entrée 47 reliée par au moins une deuxième conduite d'admission d'air 48 à une deuxième entrée d'air 34 du deuxième turbomoteur 31.

Dans ce cas, le premier système d'acheminement d'air 401 et le deuxième système d'acheminement d'air 402 peuvent être symétriques par rapport à un plan de symétrie PSYM de l'aéronef 1.

Eventuellement, la première section d'entrée d'air 44 comporte un premier filtre 98 et la deuxième section d'entrée d'air 47 comporte un deuxième filtre 99.

Par ailleurs, pour au moins une conduite d'admission d'air dite « conduite d'admission d'air équipée 400 », l'aéronef 1 comporte au moins un séparateur d'air 50 qui s'étend en fonctionnement dans cette conduite d'admission d'air équipée 400 pour redresser l'écoulement d'air en amont du turbomoteur 20 concerné et en aval de la section d'entrée d'air 41 conformément à la flèche F1. La référence 50 désigne n'importe quel séparateur d'air, les références 51, 52 désignant des séparateurs d'air particuliers des systèmes d'acheminement d'air 401, 402.

Il est possible d'équiper qu'un seul conduit d'acheminement d'air 42 avec un séparateur d'air 50, par exemple si un seul turbomoteur 20 est sujet au phénomène de pompage en raison de la géométrie des systèmes d'acheminement d'air 40.

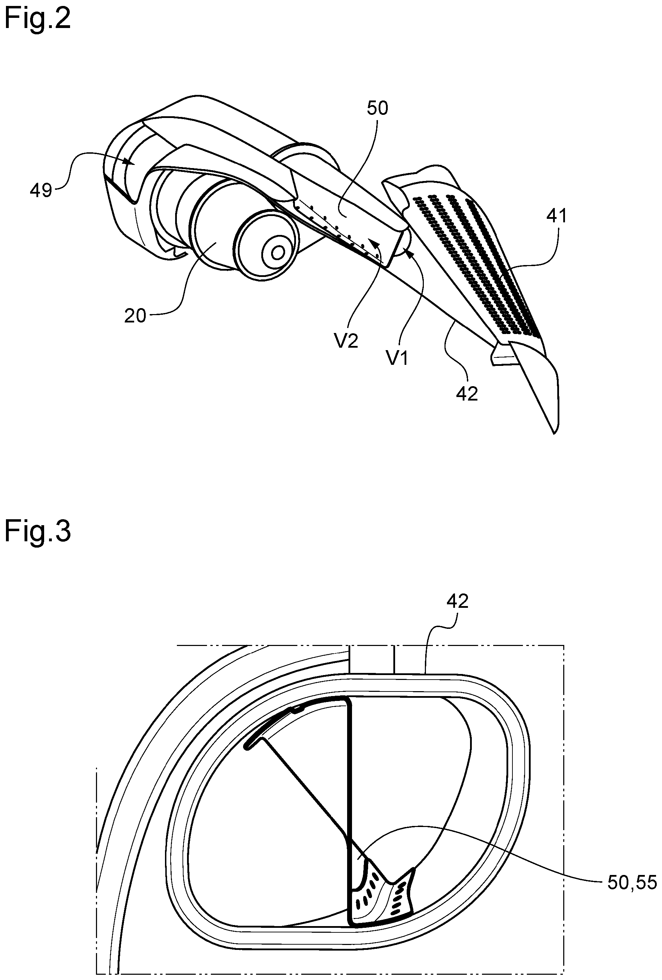

La figure 2 illustre un tel séparateur d'air 50 agencé dans une conduite d'admission d'air 42, et montre un filtre agencé au niveau de la section d'entrée 41.

En utilisation, le séparateur d'air 50 partage localement un volume interne VINT délimité par la conduite d'admission d'air équipée 400 en deux volumes V1, V2, l'air passant de la section d'entrée 41 à l'entrée d'air 49 correspondante de part et d'autre du séparateur d'air 50.

Selon la figure 3, un séparateur d'air 50 peut comporter une lame 55, éventuellement vrillée.

Indépendamment de cette forme, le séparateur d'air 50 peut être immobile en fonctionnement, à savoir en dehors d'une phase de démontage, dans la conduite d'admission d'air équipée munie de ce séparateur d'air 50.

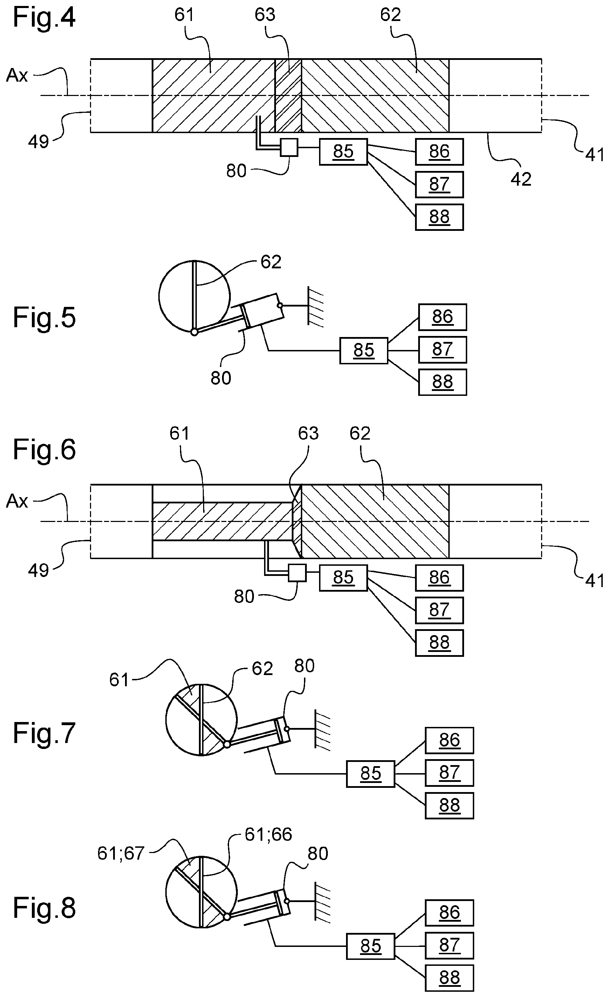

A l'inverse, les figures 4 à 13 illustrent des variantes comprenant un séparateur d'air 50 ayant au moins une partie mobile 61, à savoir déplaçable et/ou déformable élastiquement.

En référence à la figure 4 et quelle que soit la variante, l'aéronef 1 peut alors comprendre un actionneur 80 connecté mécaniquement à la partie mobile 61 pour la déplacer et/ou la déformer sur commande. Un tel actionneur 80 peut prendre la forme d'un actionneur électrique, hydraulique ou pneumatique par exemple.

De plus, l'aéronef 1 peut comporter un contrôleur relié par une liaison filaire ou non filaire avec au moins un senseur 86, 87, 88 et l'actionneur 80.

Le contrôleur peut comprendre au moins une unité traitement. L'unité de traitement peut comprendre par exemple au moins un processeur et au moins une mémoire, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur, etc.

Par senseur, on entend ici un capteur physique capable de mesurer directement le paramètre en question mais aussi un système pouvant comprendre un ou plusieurs capteurs physiques ainsi que des moyens de traitement du signal permettant de fournir une estimation du paramètre à partir des mesures fournies par ces capteurs physiques. De manière similaire, on désignera par mesure de ce paramètre aussi bien une mesure brute d'un capteur physique qu'une mesure obtenue par un traitement de signal plus ou moins complexe à partir de mesures brutes.

Par exemple, l'aéronef 1 comporte au moins un des senseurs suivants : un senseur 86 de vitesse de rotation d'un compresseur 27 du turbomoteur 20 correspondant, un senseur de pression 87 mesurant une pression de l'air alimentant le turbomoteur 20 correspondant, un senseur de température 88 mesurant une température de l'air alimentant le turbomoteur 20 correspondant.

Ainsi, le contrôleur applique des instructions pour transmettre un signal analogique ou numérique, électrique ou optique, à l'actionneur 80 en fonction des signaux transmis par le ou le senseurs 86, 87, 88. L'actionneur 80 est alors étendu ou rétracté ou déplace un organe rotatif pour déplacer ou déformer la partie mobile 61.

Selon les figures 4 à 8, le séparateur d'air 50 est déformable.

Selon la figure 4, le séparateur d'air 50 comporte une partie fixe 62 agencée dans la conduite d'admission d'air 42. La partie mobile 61 est aussi agencée dans la conduite d'admission d'air 42, et connectée à la partie fixe 62 par une liaison 63 élastiquement déformable en torsion. L'actionneur 80 est alors connecté à la partie mobile 61 pour déplacer en rotation la partie mobile 61 par rapport à la partie fixe 62, la liaison 63 se déformant en conséquence élastiquement. Ainsi, les figures 4 et 5 illustrent le séparateur d'air 50 au repos. Par exemple, la partie mobile 61, la partie fixe 62 et la liaison 63 sont coplanaires. Si nécessaire, le contrôleur 85 pilote l'actionneur 80 pour engendrer une rotation de la partie mobile 61 illustrée sur les figures 6 et 7.

Selon la figure 8, la partie mobile 61 est déformable en torsion. Par exemple, la partie mobile 61 s'étend d'une extrémité 66 fixe à une extrémité mobile 67 contrôlée par l'actionneur 80.

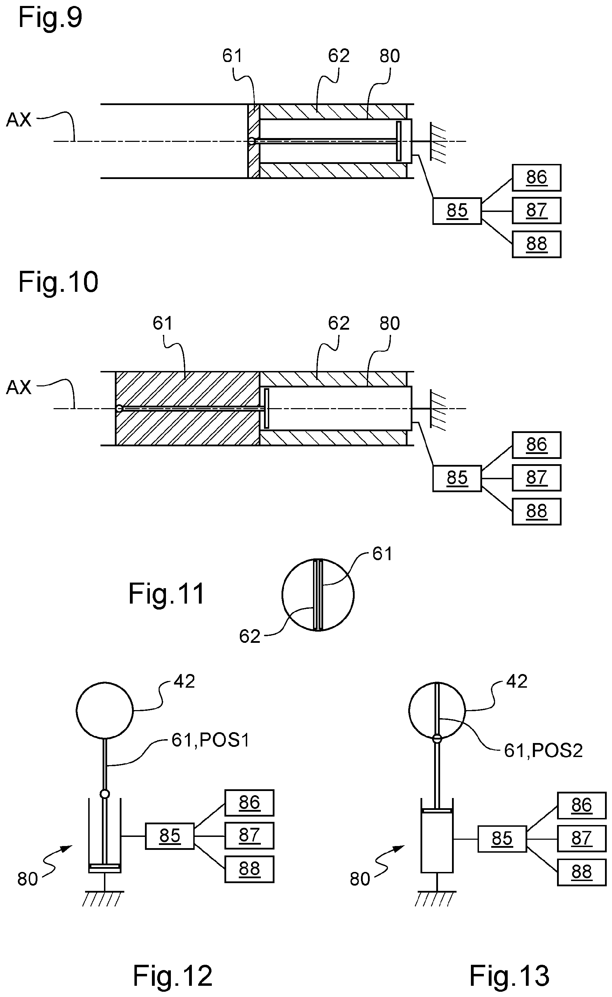

Selon les figures 9 à 13, la partie mobile 61 est mobile en translation.

Selon la figure 9, le séparateur d'air 50 comporte une partie fixe 62 agencée dans la conduite d'admission d'air 42, et une partie mobile 61 agencée dans la conduite d'admission d'air 42. La partie mobile 61 est mobile en translation par rapport à la partie fixe 62 selon un axe d'extension AX de la conduite d'admission d'air 42. L'actionneur 80 est alors connecté à la partie mobile 61 pour la déplacer en translation par rapport à la partie fixe 62.

Par exemple et tel qu'illustrée sur les figures 9 et 11, la partie mobile 61 est sensiblement accolée à la partie fixe 62 au repos. Si nécessaire, le contrôleur 85 pilote l'actionneur 80 pour engendrer une translation de la partie mobile 61 illustrée sur la figure 10 pour étendre le séparateur d'air 50.

Selon les figures 12 et 13, la partie mobile 61 est mobile entre une première position POS1 et une deuxième position POS2. Selon la figure 12, au repos, la partie mobile 61 est placée par l'actionneur 80 au moins partiellement, voire totalement, en dehors de la conduite d'admission d'air 42 dans la première position POS1. Selon la figure 13, l'actionneur 80 déplace la partie mobile 61 dans la conduite d'admission d'air 42 dans la deuxième position POS2. Dans ce cas, le séparateur d'air 50 peut ne pas avoir une partie fixe 62.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Aéronef (1) comprenant un premier turbomoteur (21) et un deuxième turbomoteur (31) alimentés en air respectivement par un premier système d'acheminement d'air (401) et un deuxième système d'acheminement d'air (402), le premier système d'acheminement d'air (401) comprenant une première section d'entrée (44) reliée par au moins une première conduite d'admission (45) d'air à une première entrée d'air (24) du premier turbomoteur (21), le deuxième système d'acheminement d'air (402) comprenant une deuxième section d'entrée (47) reliée par au moins une deuxième conduite d'admission d'air (48) à une deuxième entrée d'air (34) du deuxième turbomoteur (31),
**caractérisé en ce que**, pour une seule conduite d'admission d'air équipée (400) parmi la première conduite d'admission d'air (45) et la deuxième conduite d'admission d'air (48), ledit aéronef comporte un séparateur d'air (50) apte à être agencé dans la conduite d'admission d'air équipée (400) en amont de l'entrée d'air du turbomoteur correspondant et en aval de la section d'entrée correspondante de l'aéronef.

2. Aéronef selon la revendication 1,
**caractérisé en ce que** le premier système d'acheminement d'air (401) et le deuxième système d'acheminement d'air (402) sont symétriques par rapport à un plan de symétrie (PSYM) de l'aéronef (1).

3. Aéronef selon l'une quelconque des revendications 1 à 2,
**caractérisé en ce que** la première section d'entrée d'air (44) comporte un premier filtre (98) et la deuxième section d'entrée d'air (47) comporte un deuxième filtre (99).

4. Aéronef selon l'une quelconque des revendications 1 à 3,
**caractérisé en ce que** ledit séparateur d'air (50) partage localement en deux un volume interne (VINT) délimité par la conduite d'admission d'air équipée (400), l'air passant de la section d'entrée (41) à l'entrée d'air (49) correspondante de part et d'autre du séparateur d'air (50).

5. Aéronef selon l'une quelconque des revendications 1 à 4,
**caractérisé en ce que** ledit séparateur d'air (50) comporte une lame (55).

6. Aéronef selon la revendication 5,
**caractérisé en ce que** ladite lame (55) est vrillée.

7. Aéronef selon l'une quelconque des revendications 1 à 6,
**caractérisé en ce que** ledit séparateur d'air (50) est immobile en fonctionnement dans la conduite d'admission d'air (400).

8. Aéronef selon l'une quelconque des revendications 1 à 6,
**caractérisé en ce que** ledit séparateur d'air (50) comporte une partie mobile (61) qui est mobile par rapport à la conduite d'admission d'air équipée (400), ledit aéronef (1) comprenant un actionneur (80) connecté mécaniquement à la partie mobile (61) pour mettre en mouvement la partie mobile sur commande.

9. Aéronef selon la revendication 8,
**caractérisé en ce que** ledit aéronef (1) comporte un contrôleur (85) communiquant avec au moins un senseur (86, 87, 88) et ledit actionneur (80) pour asservir ledit actionneur (80).

10. Aéronef selon la revendication 9,
**caractérisé en ce que** ledit au moins un senseur comporte au moins un des senseurs suivants : un senseur (86) de vitesse de rotation d'un compresseur (27) du turbomoteur alimenté en air par la conduite d'admission d'air équipée (400), un senseur de pression (87) mesurant une pression de l'air alimentant le turbomoteur alimenté en air par la conduite d'admission d'air équipée (400), un senseur de température (88) mesurant une température de l'air alimentant le turbomoteur alimenté en air par la conduite d'admission d'air équipée (400).

11. Aéronef selon l'une quelconque des revendications 8 à 10,
**caractérisé en ce que** ladite partie mobile (61) est déformable en torsion.

12. Aéronef selon l'une quelconque des revendications 8 à 10,
**caractérisé en ce que** ledit séparateur d'air (50) comporte une partie fixe (62) agencée dans la conduite d'admission d'air (400) équipée, la partie mobile (61) étant agencée dans la conduite d'admission d'air équipée (400) et connectée à la partie fixe (62) par une liaison (63) élastiquement déformable en torsion, ledit actionneur (80) étant configuré pour engendrer une rotation de la partie mobile (61) par rapport à la partie fixe (62).

13. Aéronef selon l'une quelconque des revendications 8 à 10,
**caractérisé en ce que** ledit séparateur d'air (50) comporte une partie fixe (62) agencée dans la conduite d'admission d'air équipée (400), la partie mobile (61) étant mobile en translation par rapport à la partie fixe (62) selon un axe d'extension (AX) de la conduite d'admission d'air équipée (400), ledit actionneur (80) étant configuré pour engendrer une translation de la partie mobile (61) par rapport à la partie fixe (62).

14. Aéronef selon l'une quelconque des revendications 8 à 10,
**caractérisé en ce que** ladite partie mobile (61) est mobile entre une première position (POS1) et une deuxième position (POS2), la partie mobile (61) étant au moins partiellement en dehors de la conduite d'admission d'air équipée (400) dans la première position (POS1) et partageant un volume interne de la conduite d'admission d'air équipée en deux dans la deuxième position (POS2).
